# FASCICULE DE BREVET EUROPEEN

(11) **EP 0 955 779 B1**
(45) Date de publication et mention de la délivrance du brevet: **22.06.2005**
(21) Numéro de dépôt: 99400796.1
(22) Date de dépôt: 01.04.1999
(51) Int. Cl.: H04Q 7/32, H04M 1/00

(54) **Procédé pour paramétrer l'affichage sur un équipement mobile de radiocommunication coopérant avec un module d'identification d'abonné**
Verfahren zum Parameterisieren der Anzeige eines Mobilfunkgeräts welches mit einem Teilnehmeridentifikationsmodul zusammenarbeitet
A method for parameterizing the display on a mobile radiocommunication equipment cooperating with a subscriber identification module

(30) Priorité: 07.05.1998 FR 9805834
(43) Date de publication de la demande: 10.11.1999
(73) Titulaire: ALCATEL, 75008 Paris (FR)
(72) Inventeur: Hubbe, Pascal, 75014 Paris (FR); Vasnier, Frédéric, 92700 Colombes (FR)
(74) Mandataire: Feray, Valérie

(56) Documents cités:
- EP-A- 0 802 658
- "GSM: DIGITAL CELLULAR TELECOMMUNICATIONS SYSTEMS (PHASE 2+);SPECIFICATION OF THE SIM APPLICATION TOOLKIT FOR THE SUBSCRIBER IDENTITY MODULE - MOBILE EQUIPMENT (SIM - ME) INTERFACE" GSM TECHNICAL SPECIFICATION, juillet 1997 (1997-07), pages 1-5, 07, 09 - 56, XP002064640

## Description

La présente invention concerne un système de radiocommunication, notamment de type GSM (*Global System for Mobile communications* en anglais), DCS (pour *Digital Cellular System,* toujours en anglais) ou PCS (*Personnal Communication System*).

Plus particulièrement, l'invention est relative à un procédé permettant de tirer profit de façon optimale des moyens de visualisation associés à un équipement mobile de radiocommunication coopérant avec un module d'identification d'abonné.

Dans l'état de la technique antérieur, le document EP-A-0 802 658 décrit un procédé pour paramétrer l'affichage sur un moyen de visualisation d'un équipement mobile dans lequel un contrôleur contrôle l'affichage sur le moyen de visualisation. Cependant, le document EP-A-0 802 658 décrit que l'équipement mobile gère directement l'affichage et ne décrit pas que la gestion puisse être confiée à des applications stockées sur un module d'identification d'abonné (SIM).

Les recommandations GSM de l'ETSI (*European Telecommunication Standard Institute*) préconisent l'utilisation d'un module d'identification d'abonné ou SIM (pour *Subscriber Identity Module*) pour y stocker d'une part les données propres à l'utilisateur et d'autre part les données relatives aux services supplémentaires qui sont apportées au terminal de radiocommunication.

La recommandation GSM 11.11 de l'ETSI, intitulée *Digital cellular telecommunications system (phase 2+); Specification of the Subscriber Identity Module - Mobile Equipment (SIM-ME) interface*, définit l'interface entre le module d'identification d'abonné (SIM) et l'équipement mobile de radiocommunication (ME pour *Mobile Equipment,* en anglais).

La recommandation GSM 11.14 de l'ETSI, intitulée *Digital cellular telecommunications system (Phase 2+); Specification of the SIM Application Toolkit for the Subscriber Identity Module - Mobile Equipment (SIM-ME) interface,* définit la façon dont les applications (ou services) stockées sur le module d'identification d'abonné (SIM) doivent communiquer avec l'équipement mobile de radiocommunication (ME).

En particulier, cette recommandation décrit un ensemble de fonctions appelées fonctions dynamiques (ou *proactives,* en anglais) que le module d'identification d'abonné peut adresser à l'équipement mobile.

Les services supplémentaires qui sont stockés sur le module d'identification d'abonné peuvent être de différentes natures et de différents niveaux. À titre d'exemples, on peut citer :
- un service de stockage de données de type répertoire téléphonique,
- un service d'émission et de réception de messages alphanumériques courts (SMS dans la terminologie propre au GSM, pour *Short Message Service*),

L'intérêt de cette façon de faire est de rendre indépendants les services et le type d'équipement. Il est alors possible d'exploiter les services offert par un module d'identification d'abonné à partir de n'importe quel équipement de radiocommunication, c'est-à-dire indépendamment de son constructeur.

Ainsi, par exemple, le module d'identification d'abonné peut émettre une fonction consistant à afficher sur l'écran du terminal un menu dans lequel l'utilisateur doit choisir une option.

La façon dont les différentes options proposées s'affichent sur l'écran n'est pas précisée par la fonction émise par le module d'identification d'abonné. C'est l'équipement mobile qui a la charge de gérer l'affichage.

Toutefois, les possibilités d'affichage des nouvelles générations de terminaux mobiles sont devenues très intéressantes en permettant notamment des résolutions d'affichages importantes (15 lignes par 15 colonnes, par exemple).

L'état de la technique devient alors insuffisant pour permettre à l'application de gérer cet espace d'affichage.

Notamment, l'application qui se voit offrir un tel espace d'affichage peut désirer gérer l'affichage plutôt que de laisser l'équipement mobile décider par lui-même.

Le but de la présente invention est donc de permettre au module d'identification d'abonné de paramétrer l'affichage afin d'offrir une plus grande liberté aux applications de disposer des moyens de visualisation associés à l'équipement mobile.

L'invention a pour objet un procédé permettant de paramétrer l'affichage stockant des applications sur un moyen de visualisation associé à un équipement mobile de radiocommunication coopérant avec un module d'identification d'abonné stockant des applications comportant les étapes ordonnées suivantes :
- émission par le module d'identification d'abonné d'un ensemble de commandes, à destination de l'équipement mobile, lesdites commandes permettant auxdites applications de paramétrer l'affichage sur ledit moyen de visualisation,
- exécution de ces commandes par l'équipement mobile sur le moyen de visualisation.

Afin de mettre en oeuvre ce procédé, l'invention a aussi pour objet un système de radiocommunication comportant un module d'identification d'abonné coopérant avec un équipement mobile possédant un moyen de visualisation, ledit module d'identification d'abonné possédant un moyen d'émission d'un ensemble de commandes permettant de paramétrer l'affichage sur ledit moyen de visualisation, et ledit équipement mobile possédant un moyen d'exécution desdites commandes sur ledit moyen de visualisation.

D'autres caractéristiques et avantages de l'invention apparaîtront à la lecture de la description suivante d'un mode de réalisation préférentiel de l'invention, donné à titre de simple exemple indicatif et non limitatif, et des dessins annexés, dans lesquels :

La figure 1 illustre un système de radiocommunication conforme à un mode de réalisation particulier de l'invention, comportant un module d'identification d'abonné et un équipement mobile.

Les figures 2a à 2c illustrent différentes configurations de l'affichage sur le moyen de visualisation associé à l'équipement mobile de radiocommunication.

Cette description sera faite dans la cadre des recommandations GSM 11.11 et GSM 11.14 de l'ETSI. Toutefois, il est naturellement à la portée de l'homme du métier d'étendre cet exemple de mise en oeuvre à d'autres systèmes de radiocommunication.

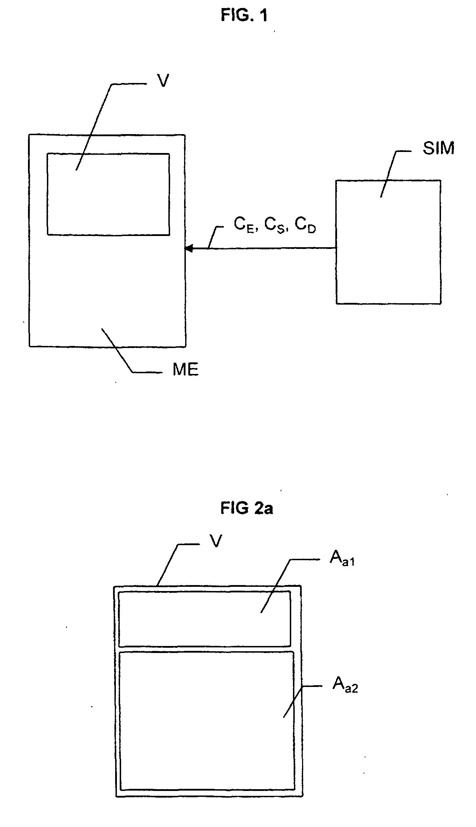

Selon la recommandation GSM 11.11 et conformément à la figure 1, un terminal de radiocommunication est composé d'un module d'identification d'abonné SIM et d'un équipement mobile ME.

Le protocole de communication et l'interface entre ces deux éléments sont décrits par les recommandations GSM 11.11 pour les aspects généraux et GSM 11.14 pour les différentes fonctions que le module d'identification d'abonné SIM peut adresser à l'équipement mobile ME.

Selon ces recommandations, ce protocole est de type maître/esclave, l'équipement mobile ME jouant toujours le rôle du maître. Cela signifie notamment que le module d'identification d'abonné SIM ne peut transmettre une commande à l'équipement mobile ME que sur requête de celui-ci.

Le mécanisme d'émission d'une commande par le module d'identification d'abonné SIM vers l'équipement mobile ME est plus précisément décrit dans le paragraphe 6.1 de la recommandation GSM 11.14 : lorsque l'équipement mobile ME envoie une commande vers le module d'identification d'abonné SIM, celui-ci renvoie un message de résultat qui comporte un champ de statuts.

Une certaine valeur de ce champ de statuts signifie à l'équipement que le module d'identification d'abonné désire émettre une commande dite proactive. À ce moment-là, l'équipement mobile ME émet une commande particulière intitulée FETCH qui récupère cette commande proactive.

Selon une mise en oeuvre de l'invention une nouvelle commande C_{E}, dite d'activation, est ajoutée à l'ensemble des commandes dynamiques (ou *proactives,* en anglais) du module d'identification d'abonné SIM afin de permettre de diviser le moyen de visualisation en une ou plusieurs aires d'affichage.

Cette commande peut comporter plusieurs paramètres.

Un premier paramètre peut être le nombre d'aires d'affichage.

Un deuxième paramètre peut préciser la disposition des différentes aires d'affichage. Notamment, ce deuxième paramètre peut préciser si les aires sont disposées de façon horizontale ou de façon verticale.

Un troisième paramètre peut préciser la taille des différentes aires d'affichage.

Un quatrième paramètre peut permettre de préciser l'apparence des bordures autour des aires d'affichage. Notamment, il peut indiquer si les aires d'affichage doivent posséder une bordure visible ou non. Éventuellement, ce paramètre, ou un autre paramètre, peut préciser le type de bordure à afficher (épaisseur de la bordure, traits simples ou doubles...).

Les figures 2a à 2c illustrent différentes possibilités d'agencements d'aires d'affichage, en fonction de différentes combinaisons de ces paramètres.

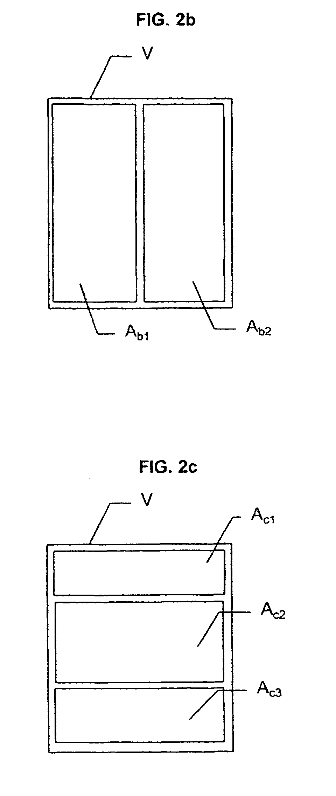

Les figures 2a et 2b représentent un agencement comportant deux aires d'affichage. Dans la figure 2a, celles-ci (Aₐ₁, Aₐ₂) sont agencées horizontalement et ont des dimensions différentes. Dans la figure 2b, les aires d'affichage A_{b1} et A_{b2} ont des dimensions identiques et sont disposées verticalement. Enfin l'agencement de la figure 2c comporte 3 aires d'affichage A_{c1}, A_{c2} et A_{c3} de dimensions différentes et disposées horizontalement.

Ces différents agencements peuvent être obtenus en donnant les valeurs idoines aux paramètres indiqués ci-dessus.

Il est à noter que la liste de paramètres qui a été donnée n'est pas exhaustive.

Selon une mise en oeuvre particulière de l'invention une deuxième commande C_{S}, dite de sélection, peut être ajoutée à l'ensemble des commandes dynamiques du module d'identification d'abonné SIM. Son but est de permettre la sélection d'une aire d'affichage particulière sur laquelle seront affichés les commandes d'affichages ultérieures.

Elle comporte donc un paramètre qui identifie une aire d'affichage parmi l'ensemble des aires d'affichage déterminées par la précédente commande d'activation C_{E}.

Ces commandes d'affichages ultérieures sont toutes les commandes de l'ensemble des commandes dynamiques du SIM dont l'objet est d'afficher quelque chose sur le moyen de visualisation V associé à l'équipement mobile ME. Dans l'ensemble des commandes dynamiques données par la recommandation GSM 11.14, ces commandes sont SELECT ITEM, DISPLAY TEXT, SET UP MENU, GET INKEY et GET INPUT. D'autres commandes ajoutées à cet ensemble peuvent aussi être concernées.

Ainsi chaque fois que le module d'identification d'abonné SIM envoie une de ces commandes vers l'équipement mobile ME, celui-ci doit diriger l'affichage correspondant vers l'aire d'affichage qui a été indiquée par la commande C_{S} qui a précédé.

De cette façon, les commandes dynamiques existantes ne sont pas modifiées et peuvent quand même tirer profit des paramètres de l'affichage.

Selon une mise en oeuvre particulière de l'invention, une troisième commande C_{D} dite de désactivation, peut être ajoutée à l'ensemble des commandes dynamiques du module d'identification d'abonné SIM. Son but est de désactiver les paramètres courant de l'affichage.

Son effet peut être :
- de revenir à une configuration comportant une seule aire d'affichage recouvrant l'ensemble du moyen de visualisation V, ou,
- de supprimer une ou plusieurs aires d'affichage et de répartir l'espace au profit d'une ou plusieurs autres aires d'affichage.

D'autres possibilités sont bien sûr envisageables et la présente invention ne saurait être comprise comme se limitant à ces exemples de mises en oeuvre.

Par ailleurs, de façon avantageuse, le procédé selon l'invention peut comporter une étape préalable de détermination des valeurs autorisées pour les paramètres d'affichage.

Cette étape est réalisée préférentiellement lors de l'initialisation du module d'identification d'abonné (SIM). Elle peut être constituée des deux sous-étapes suivantes :
- émission par le module d'identification d'abonné (SIM) d'une commande d'acquisition des paramètres autorisés,
- émission par l'équipement mobile (ME) desdits paramètres autorisés.

Les paramètres autorisés en question peuvent être sous la forme :
- d'un nombre maximal d'aires d'affichage pouvant être simultanément affichées sur le moyen de visualisation,
- d'une valeur booléenne indiquant si un agencement vertical des aires d'affichage est autorisé.
- d'une valeur booléenne indiquant si un agencement horizontal des aires d'affichage est autorisé.

## Revendications

1. Procédé pour paramétrer l'affichage sur un moyen de visualisation (V) associé à un équipement mobile (ME) de radiocommunication coopérant avec un module d'identification d'abonné (SIM)stockant des applications, ledit procédé comportant les étapes ordonnées suivantes :
• émission par ledit module d'identification d'abonné (SIM) d'un ensemble de commandes, à destination dudit équipement mobile (ME), lesdites commandes permettant auxdites applications de paramétrer l'affichage sur ledit moyen de visualisation (V),
• exécution par ledit équipement mobile (ME) desdites commandes sur ledit moyen de visualisation (V).

2. Procédé selon la revendication précédente, **caractérisé en ce que** ledit ensemble de commandes comporte une commande d'activation (C_{E}) permettant de diviser le moyen de visualisation (V) en une ou plusieurs aires d'affichages.

3. Procédé selon l'une des revendications précédentes, **caractérisé en ce que** ledit ensemble de commandes comporte une commande de sélection (C_{S}) permettant auxdites applications de sélectionner une aire d'affichage particulière sur laquelle seront affichées les commandes d'affichages ultérieures.

4. Précédé selon l'une des revendications précédentes, **caractérisé en ce que** ledit ensemble de commandes comporte une commande de désactivation (C_{D}) permettant de désactiver les paramètres courants de l'affichage dudit moyen de visualisation (V).

5. Procédé selon l'une des revendications 2 à 4, **caractérisé en ce que** ladite commande d'activation (C_{E}) comporte un ou plusieurs paramètres parmi l'ensemble suivant :
• nombre desdites aires d'affichage,
• disposition desdites aires d'affichage,
• taille desdites aires d'affichage,
• apparence de la bordure desdites aires d'affichage.

6. Procédé selon l'une des revendications 2 à 5, **caractérisé en ce que** ladite commande d'activation (C_{E}) et/ou ladite commande de sélection (C_{S}) et/ou ladite commande de désactivation (C_{D}) est une commande du jeu de commandes dudit module d'identification d'abonné (SIM), ainsi qu'il est définit par les recommandations GSM 11.11 et GSM 11.14 de l'ETSI.

7. Procédé selon l'une des revendications précédentes, **caractérisé en ce qu'**il comporte une étape préalable de détermination des paramètres autorisés se décomposant en les sous-étapes suivantes :
• émission par le module d'identification d'abonné (SIM) d'une commande d'acquisition desdits paramètres autorisés,
• émission par l'équipement mobile (ME) desdits paramètres autorisés.

8. Système de radiocommunication comporte un module d'identification d'abonné (SIM) coopérant avec un équipement mobile (ME) possédant un moyen de visualisation, ledit module d'identification d'abonné stockant des applications et possédant un moyen d'émission d'un ensemble de commandes permettant auxdites applications de paramétrer l'affichage sur ledit moyen de visualisation (V), et ledit équipement mobile possédant un moyen d'exécution desdites commandes sur ledit moyen de visualisation.

9. Système de radiocommunication selon la revendication précédente, **caractérisé en ce que** ledit ensemble de commandes comporte une commande d'activation (C_{E}) permettant de diviser le moyen de visualisation (V) en une-ou plusieurs aires d'affichages.

10. Système de radiocommunication selon l'une des revendications 8 à 9, **caractérisé en ce que** ledit ensemble de commandes comporte une commande de sélection (C_{S}) permettant auxdites applications de sélectionner une aire d'affichage particulière sur laquelle seront affichées les commandes d'affichages ultérieures.

11. Système de radiocommunication selon l'une des revendications 8 à 10, **caractérisé en ce que** ledit ensemble de commandes comporte une commande de désactivation (C_{D}) permettant de désactiver les paramètres courants de l'affichage dudit moyen de visualisation (V).

12. Système de radiocommunication selon l'une des revendications 9 à 11, **caractérisé en ce que** ladite commande d'activation (C_{E}) comporte un ou plusieurs paramètres parmi l'ensemble suivant :
• nombre desdites aires d'affichage,
• disposition desdites aires d'affichage,
• taille desdites aires d'affichage,
• apparence de la bordure desdites aires d'affichage.

13. Système de radiocommunication selon l'une des revendications 9 à 12, **caractérisé en ce que** ladite commande d'activation (C_{E}) et/ou ladite commande de sélection (C_{S}) et/ou ladite commande de désactivation (C_{D}) est une commande du jeu de commandes dudit module d'identification d'abonné (SIM), ainsi qu'il est définit par les recommandations GSM 11.11 et GSM 11.14 de l'ETSI.

## Patentansprüche

1. Verfahren zum Parametrieren der Darstellung auf einem Sichtanzeigemittel (V), das einem Mobilfunkgerät (ME) zugeordnet ist, das mit einem Teilnehmeridentifizierungsmodul (SIM) zusammenarbeitet, das Anwendungen speichert, wobei das Verfahren die folgenden geordneten Arbeitsschritte umfasst:
- Aussenden eines Befehlssatzes von dem Teilnehmeridentifizierungsmodul (SIM) an das Mobilfunkgerät (ME), wobei die Befehle den Anwendungen ermöglichen, die Darstellung auf dem Sichtanzeigemittel (V) zu parametrieren,
- Ausführen der Befehle auf dem Sichtanzeigemittel (V) durch das Mobilfunkgerät (ME).

2. Verfahren nach dem vorhergehenden Anspruch, **dadurch gekennzeichnet, dass** der Befehlssatz einen Aktivierungsbefehl (C_{E}) umfasst, um das Sichtanzeigemittel (V) in eine oder mehrere Darstellungsflächen zu unterteilen.

3. Verfahren nach einem der vorhergehenden Ansprüche, **dadurch gekennzeichnet, dass** der Befehlssatz einen Auswahlbefehl (C_{S}) umfasst, damit die Anwendungen eine besondere Darstellungsfläche wählen können, auf der die weiteren Darstellungsbefehle dargestellt werden.

4. Verfahren nach einem der vorhergehenden Ansprüche, **dadurch gekennzeichnet, dass** der Befehlssatz einen Deaktivierungsbefehl (C_{D}) umfasst, um die derzeitigen Darstellungsparameter des Sichtanzeigemittels (V) zu deaktivieren.

5. Verfahren nach einem der Ansprüche 2 bis 4, **dadurch gekennzeichnet, dass** der Aktivierungsbefehl (C_{E}) einen oder mehrere Parameter des folgenden Satzes umfasst:
- Anzahl der Darstellungsflächen,
- Anordnung der Darstellungsflächen,
- Größe der Darstellungsflächen,
- Aussehen der Umrandung der Darstellungsflächen.

6. Verfahren nach einem der Ansprüche 2 bis 5, **dadurch gekennzeichnet, dass** der Aktivierungsbefehl (C_{E}) und/oder der Auswahlbefehl (C_{S}) und/oder der Deaktivierungsbefehl (C_{D}) ein Befehl aus dem Befehlssatz des Teilnehmeridentifizierungsmoduls (SIM) ist, wie er von den ETSI-Empfehlungen GSM 11.11 und GSM 11.14 festgelegt ist.

7. Verfahren nach einem der vorhergehenden Ansprüche, **dadurch gekennzeichnet, dass** es einen vorangehenden Arbeitsschritt zur Bestimmung der erlaubten Parameter umfasst, der in die folgenden Teilschritte aufgegliedert ist:
- Aussenden durch das Teilnehmeridentifizierungsmodul (SIM) eines Befehls zur Erfassung der erlaubten Parameter,
- Aussenden der erlaubten Parameter durch das Mobilfunkgerät (ME).

8. Funksystem, umfassend ein Teilnehmeridentifizierungsmodul (SIM), das mit einem Mobilfunkgerät (ME) zusammenarbeitet, das ein Sichtanzeigemittel besitzt, wobei das Teilnehmeridentifizierungsmodul Anwendungen speichert und ein Mittel zum Aussenden eines Befehlssatzes besitzt, der es den Anwendungen ermöglicht, die Darstellung auf dem Sichtanzeigemittel (V) zu parametrieren, und wobei das Mobilfunkgerät ein Mittel zur Ausführung der Befehle auf dem Sichtanzeigemittel besitzt.

9. Funksystem nach dem vorhergehenden Anspruch, **dadurch gekennzeichnet, dass** der Befehlssatz einen Aktivierungsbefehl (C_{E}) umfasst, um das Sichtanzeigemittel (V) in eine oder mehrere Darstellungsflächen zu unterteilen.

10. Funksystem nach einem der Ansprüche 8 bis 9, **dadurch gekennzeichnet, dass** der Befehlssatz einen Auswahlbefehl (C_{S}) umfasst, damit die Anwendungen eine besondere Darstellungsfläche wählen können, auf der die weiteren Darstellungsbefehle dargestellt werden.

11. Funksystem nach einem der Ansprüche 8 bis 10, **dadurch gekennzeichnet, dass** der Befehlssatz einen Deaktivierungsbefehl (C_{D}) umfasst, um die derzeitigen Darstellungsparameter des Sichtanzeigemittels (V) zu deaktivieren.

12. Funksystem nach einem der Ansprüche 9 bis 11, **dadurch gekennzeichnet, dass** der Aktivierungsbefehl (C_{E}) einen oder mehrere Parameter des folgenden Satzes umfasst:
- Anzahl der Darstellungsflächen,
- Anordnung der Darstellungsflächen,
- Größe der Darstellungsflächen,
- Aussehen der Umrandung der Darstellungsflächen.

13. Funksystem nach einem der Ansprüche 9 bis 12, **dadurch gekennzeichnet, dass** der Aktivierungsbefehl (C_{E}) und/oder der Auswahlbefehl (C_{S}) und/oder der Deaktivierungsbefehl (C_{D}) ein Befehl aus dem Befehlssatz des Teilnehmeridentifizierungsmoduls (SIM) ist, wie er von den ETSI-Empfehlungen GSM 11.11 und GSM 11.14 festgelegt ist.

## Claims

1. A method for setting up the display on a viewing means (V) associated with a mobile equipment (ME) cooperating with a subscriber identity module (SIM) storing applications, said method comprising the following ordered steps:
- transmission by said subscriber identity module (SIM) of a command set to said mobile equipment (ME), said commands enabling said applications to set up the display on said viewing means (V),
- execution by said mobile equipment (ME) of said commands on said viewing means (V).

2. The method according to the preceding claim, **characterized in that** said command set comprises an enable command (C_{E}) for diving the viewing means (V) into one or several display areas.

3. The method according to any of the preceding claims, **characterized in that** said command set comprises a select command (C_{S}) so that said applications can select a particular display area wherein subsequent display commands will be displayed.

4. The method according to any of the preceding claims, **characterized in that** the command set comprises a disable command (C_{D}) for disabling the current display parameters of said viewing means (V).

5. The method according to any of claims 2 to 4, **characterized in that** said enable command (C_{E}) comprises one or several parameters from the following set:
- the number of said display areas,
- the layout of said display areas,
- the size of said display areas,
- the aspect of the border of said display areas.

6. The method according to any of claims 2 to 5, **characterized in that** said enable command (C_{E}) and/or said select command (C_{S}) and/or said disable command (C_{D}) is a command from the command set of the subscriber identity module (SIM), such as defined by ETSI recommendations GSM 11.11 and GSM 11.14.

7. The method according to any of the preceding claims, **characterized in that** it comprises a step prior to determining the authorized parameters, composed of the following substeps:
- transmission by the subscriber identity module (SIM) of a command for acquiring said authorized parameters,
- transmission by the mobile equipment (ME) of said authorized parameters.

8. A radiocommunication system, comprising a subscriber identity module (SIM) cooperating with a mobile equipment (ME) having a viewing means, said subscriber identity module storing applications and having a means for transmitting a command set so that said applications can set up the display on said viewing means (V), and said mobile equipment having a means for executing said commands on said viewing means.

9. The radiocommunication system according to the preceding claim, **characterized in that** said command set comprises an enable command (C_{E}) for dividing the viewing means (V) into one or several viewing areas.

10. The radiocommunication system according to any of claims 8 to 9, **characterized in that** said command set comprises a select command (C_{S}) so that said applications can select a particular display area wherein subsequent display commands will be displayed.

11. The radiocommunication system according to any of claims 8 to 10, **characterized in that** said command set comprises a disable command (C_{D}) for disabling the current display parameters of said viewing means (V).

12. The radiocommunication system according to any of claims 9 to 11, **characterized in that** said enable command (C_{E}) comprises one or several parameters from the following set:
- the number of said display areas,
- the layout of said display areas,
- the size of said display areas,
- the aspect of the border of said display areas.

13. The radiocommunication system according to any of claims 9 to 12, **characterized in that** said enable command (C_{E}) and/or said select command (C_{S}) and/or said disable command (C_{D}) is a command from the command set of the subscriber identity module (SIM), such as defined by ETSI recommendations GSM 11.11 and GSM 11.14.
